# EUROPÄISCHE PATENTANMELDUNG

(11) **EP 0 811 781 A2**
(43) Veröffentlichungstag der Anmeldung: **10.12.1997**
(21) Anmeldenummer: 97108613.7
(22) Anmeldetag: 28.05.1997
(51) Int. Cl.: F16D 65/00

(54) **Vorrichtung zum Dämpfen und Tilgen von Bremsgeräuschen**

(30) Priorität: 05.06.1996 DE 19622546
(71) Anmelder: ITT MANUFACTURING ENTERPRISES, INC., Wilmington, Delaware 19801 (US)
(72) Erfinder: Pankau, Johann, 64289 Darmstadt (DE); Westerwald, Martin, 63322 Rödermark (DE); Sittig, Andreas, 65719 Hofheim (DE); Rückert, Helmut, 64354 Reinheim (DE); Winter, Klaus, 37181 Hardegsen (DE)
(74) Vertreter: Portwich, Peter

(57) **Zusammenfassung**

Zur Vermeidung und Bekämpfung von Bremsgeräuschen wird eine Vorrichtung vorgeschlagen, welche zumindest ein schwingungsdämpfendes Bauelement (2) und zumindest ein mit diesem zusammenwirkendes schwingungstilgendes Bauelement (4) aufweist. Die Vorrichtung ist zur Anordnung und Montage an unterschiedliche Bremsenbauarten geeignet und bestimmt.

## Beschreibung

Die Erfindung betrifft eine Vorrichtung zum Dämpfen und Tilgen von Bremsgeräuschen.

Es gilt als erwiesen, daß Bremsgeräusche von Schwingungen herrühren, welche aufgrund periodischer Reibkraftschwankungen zwischen Bremsbacken und Bremsscheibe bzw. Bremstrommel angeregt werden. Insbesondere das Bremsquietschen wird als unangenehm empfunden und es sind zahlreiche Maßnahmen vorgeschlagen worden, welche störende Geräusche der Bremse verhindern sollen, indem entweder schwingende Bremsenteile gedämpft werden oder Schwingungstilger vorgesehen sind.

Aus der DE-OS 40 36 401 ist beispielsweise ein Geräuschdämpfer bekannt, wobei eine Zusatzmasse federnd auf das schwingende Bauteil gedrückt wird. Nachteilig ist bei diesem Stand der Technik, daß der Geräuschdämpfer nur bei einer bestimmten Frequenz wirksam ist, so daß Geräusche anderer Frequenz weitgehend unbedämpft bleiben.

Bis heute ist das Problem störender Bremsgeräusche noch nicht zufriedenstellend gelöst. Die bekannten Maßnahmen verhindern das Bremsgeräusch nur bei einem bestimmten Betriebszustand, zeitweise oder nur bei einer bestimmten Bremsenbauart.

Aufgabe der vorliegenden Erfindung ist es daher, eine Vorrichtung zum Dämpfen und Tilgen von Bremsgeräuschen bereitzustellen, welche Bremsgeräusche in allen Betriebszuständen und für alle Bremsenbauarten zuverlässig und auf Dauer löst.

Diese Aufgabe wird gelöst durch zumindest ein schwingungsdämpfendes Bauelement und zumindest einem mit diesem zusammenwirkenden schwingungstilgenden Bauelement.

Die erfindungsgemäße Kombination von zumindest einem schwingungsdämpfenden Bauelement und zumindest einem mit diesem zusammenwirkenden schwingungstilgenden Bauelement gewährleistet eine besonders zuverlässige Geräuschbekämpfung. Darüber hinaus ist das vorgeschlagene Lösungsprinzip vielfältig anwendbar.

Bei einem Ausführungsbeispiel der Erfindung gemäß Anspruch 10 ist ein funktionsnotwendiges Bauteil als schwingungstilgendes Bauelement vorgesehen.

Weiterbildungen der Erfindung gehen aus Unteransprüchen in Verbindung mit der Beschreibung und der Zeichnung hervor.

Die Erfindung wird nachstehend anhand von Ausführungsbeispielen, die in der Zeichnung schematisch dargestellt sind, näher beschrieben. Dabei zeigt:
- Fig. 1: eine Vorrichtung nach der Erfindung im Schnitt;
- Fig. 2: ein Ausführungsbeispiel der Erfindung in einer Ansicht wie in Fig. 1;
- Fig. 3: ein weiteres Ausführungsbeispiel der Erfindung in einer Ansicht wie in Fig. 2;
- Fig. 4: ein Bremsenbauteil mit daran angeordneten Vorrichtungen gemäß Fig. 2;
- Fig. 5: eine weitere Ausführungsform der Erfindung im Schnitt;
- Fig. 6: ein fünftes Ausführungsbeispiel der Geräuschdämmvorrichtung in einer Ansicht wie in Fig. 5;
- Fig. 7: abgeschnittene Ansicht in Richtung des Pfeiles A in Fig. 6.

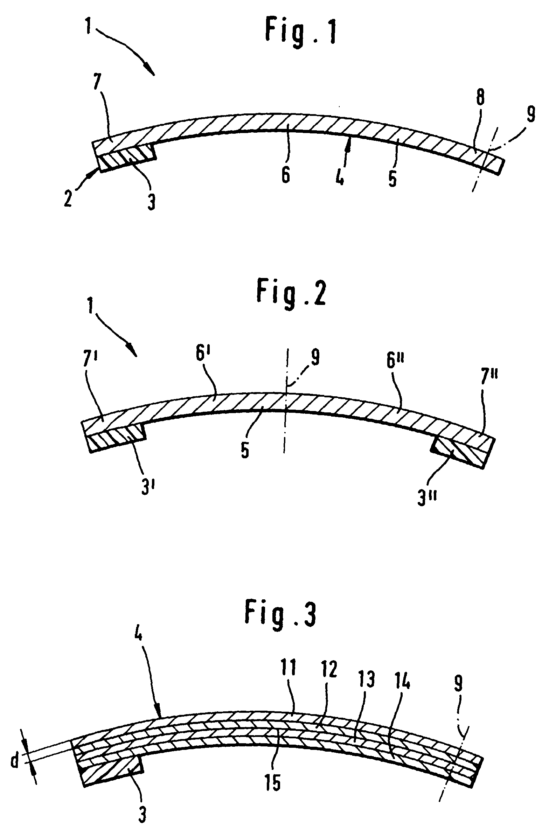

Eine Vorrichtung 1 zum Dämpfen und Tilgen von Bremsgeräuschen umfaßt gemäß Fig. 1 zumindest ein schwingungsdämpfendes Bauelement 2, welches als Dämpfungselement 3 an der Geräuschdämmvorrichtung 1 angeordnet ist. Die Vorrichtung 1 umfaßt darüber hinaus zumindest ein mit dem schwingungsdämpfenden Bauelement 2 zusammenwirkendes schwingungstilgendes Bauelement 4. Wie Fig. 1 zeigt, ist das schwingungstilgende Bauelement 4 als Federelement 5 mit einem Schenkel 6 ausgebildet und verfügt über eine definierte Masse sowie Federsteifigkeit. Das Dämpfungselement 3 befindet sich an einem Schenkelende 7 und wird durch das Federelement 5 elastisch gegen das zu dämpfende Bauteil gedrückt. Das Dämpfungselement 3 befindet sich somit zwischen dem zu dämpfenden Bauteil und dem Federelement 5. An einem anderen Ende 8 befindet sich eine Befestigungsstelle 9, mit der das Federelement 5, welches gemäß Fig. 1 vorzugsweise als Blattfeder ausgebildet ist, auf grundsätzlich bekannte Art und Weise an dem zu dämpfenden Bauteil befestigt werden kann, wobei bevorzugt Schraub-, Niet-, Kleb-, Steck- bzw. Clipverbindungen zum Einsatz kommen. Denkbar sind aber auch andere Befestigungsarten wie beispielsweise Schweißen oder Löten.

Fig. 2 zeigt eine Geräuschdämmvorrichtung 1, wobei mit Fig. 1 übereinstimmende Bauelemente mit gleichen Bezugsziffern versehen sind. Das Federelement 5 verfügt über eine mittig angeordnete Befestigungsstelle 9 mit zwei seitlich angeordneten Schenkeln 6', 6''. Die Befestigungsstelle wird den jeweiligen Erfordernissen angepasst und es sind grundsätzlich auch außermittige Anordnungen möglich. Jeder Schenkel 6',6'' weist an seinem Schenkelende 7', 7'' je ein Dämpfungselement 3',3'' auf, welches infolge Federvorspannkraft das zu dämpfende Bauteil beaufschlagt. Das Federelement 5 ist bei dem Ausführungsbeispiel gemäß Fig. 2, so wie in Fig. 1, gekrümmt ausgebildet, und die konkave Seite wird bei der Montage an eine Bremseinrichtung vorzugsweise dem zu dämpfenden Bauteil zugewandt. Unter Anpassung an das zu dämpfende Bauteil, zur Herstellung einer bestimmten Federrate oder eines bestimmten Federweges, sind aber vielfältige Formgebungen denkbar, ohne den Erfindungsgedanken zu verlassen. Es ist insbesondere möglich, das Federelement auch eben oder konvex gekrümmt auszubilden. Als Material für das Dämpfungselement 3 kommen grundsätzlich alle Werkstoffe in Frage, wobei besonders gute Ergebnisse mit Kunststoffwerkstoffen und Gummiwerkstoffen wie beispielsweise EPDM zu erzielen sind. Die Charakteristik des Federelementes 5, d.h. dessen Federkennlinie, hängt in besonderem Maße von dem gewählten Werkstoff und der Federform ab. Je nach Einsatzbedingungen kommt hierfür Stahl, Guß, Nichteisen-Metalle, aber auch Kunststoffe wie beispielsweise glasfaserverstärkter Kunststoff, kohlefaserverstärkter Kunststoff sowie Thermoplaste und Duroplaste in Frage.

Fig. 3 zeigt eine Vorrichtung 1, welche sich insbesondere dadurch von Fig. 1 unterscheidet, daß ein schwingungstilgendes Bauelement 4 nach Art eines Blattfederpaketes mit mehreren Lagen vorgesehen ist. Die Anzahl der Lagen 11,12,13,14 und deren Dicke d ist beliebig und kann den herrschenden Betriebsbedingungen und der gewünschten Federwirkung angepaßt werden. Die Lagen 11,12,13,14 weisen bevorzugt eine unterschiedliche Dicke d auf und sind beispielsweise unter zuhilfenahme von Kleberzwischenlagen 15 aneinander befestigt. Der mehrlagige Aufbau führt zu einer, in das Federelement 5 integrierten, das Dämpfungselement 3 unterstützenden, Dämpfungswirkung. Es ist allerdings auch denkbar, daß die Eigendämpfung des Federelementes 5 ein separates Dämpfungselement 3 überflüssig macht. Eine Beeinflussung der sogenannten Fugendämpfung erfolgt dadurch, daß gezielt bestimmte Klebertypen ausgewählt oder eine bestimmte Klebstoffschicht-Dicke eingestellt wird. Im übrigen ist die Federrate abhängig von dem Werkstoff und der Form der Lagen 11,12,13,14.

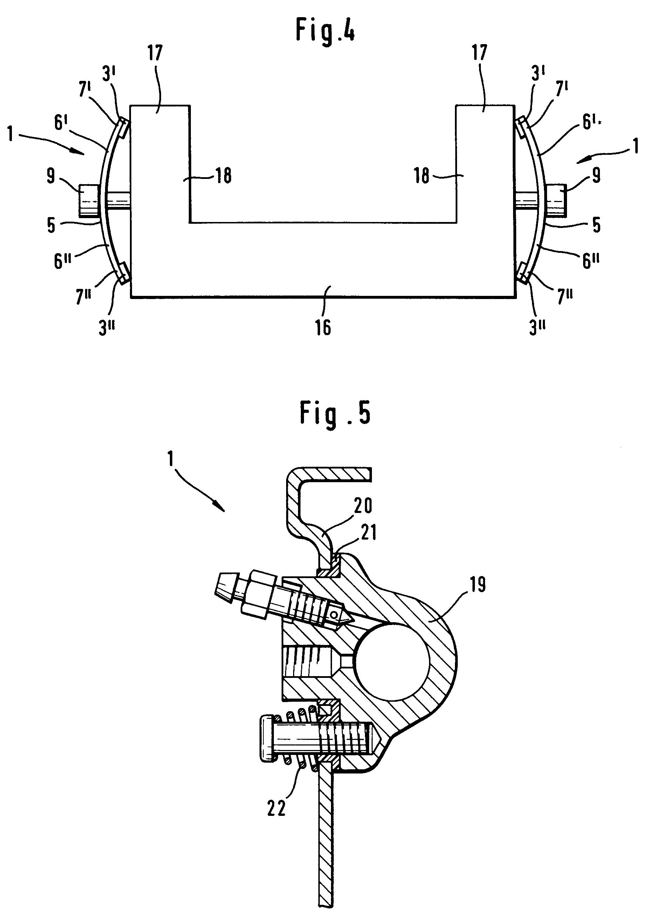

In Fig. 4 sind zwei grundsätzlich gleiche Vorrichtungen 1 an einem schematisiert gezeichneten Bauteil 16 einer Bremseinrichtung, beispielsweise einem Bremsgehäuse oder einem Bremsträger, angeordnet. Jede Vorrichtung ist mittels Befestigungsstellen 9 an dem Bauteil 16 befestigt, vorzugsweise angeschraubt und beaufschlagen mit den an den Schenkelenden 7' vorgesehenen Dämpfungselementen 3' die freien Enden 17 von an dem Bauteil 16 angeordneten Armen 18. Es wird vorzugsweise eine Stelle des Bauteiles 16 mit großen Schwingungsamplituden beaufschlagt.

Es versteht sich, daß derartige Vorrichtungen 1 mit beaufschlagenden Dämpfungselementen 3',3'' in beliebiger Weise, beliebiger Anzahl sowie an grundsätzlich jede Stelle eines zu dämpfenden Bauteiles 16 herangeführt werden können. Die Funktion der Vorrichtung 1 beruht hierbei einerseits auf der Dämpfungswirkung schwingungsdämpfender Bauelemente 2 sowie andererseits auf Schwingungstilgung. Die Tilgungswirkung ist beeinflußbar durch die Masse der Vorrichtung 1 und insbesondere die Masse des Federelementes 5. Bei Anwendungen im Automobilbau wird eine möglichst geringe Masse angestrebt, damit das Gesamtgewicht der Bremseinrichtung möglichst gering bleibt. Bei derartigen Ausführungsformen kann der auf Schwingungtilgung beruhende Geräuschbekämpfungsanteil geringer abgestimmt sein, als der Anteil der Dämpfung.

Ein anderes, in Fig. 5 schematisch gezeichnetes, Ausführungsbeispiel zeigt ein Bauteil 19 in Form eines Bremszylinders, das an einem tragenden Haltelement 20 elastisch angeordnet ist. Diese Elastizität wird erreicht durch eine zwischen dem Bauteil 19 und dem Halteelement 20 angeordnete Zwischenlage 21 sowie ein Federelement 22, welches das Bauteil 19 gegenüber dem Halteelement 20 verspannt. Schwingungen des Halteelementes 20 führen zu einer Anregung des Bauteiles 19 und zu gedämpften Schwingungen relativ zu dem Halteelement 20. Es ist anzumerken, daß bei dieser Vorrichtung keine zusätzliche Masse zur Schwingungstilgung herangezogen wird, sondern die Masse eines unerlässlichen, funktionsnotwendigen Bauteiles. Es wirkt hierbei die Zwischenlage 21 als schwingungsdämpfendes Bauelement und das Bauteil 19 als schwingungstilgendes Bauelement.

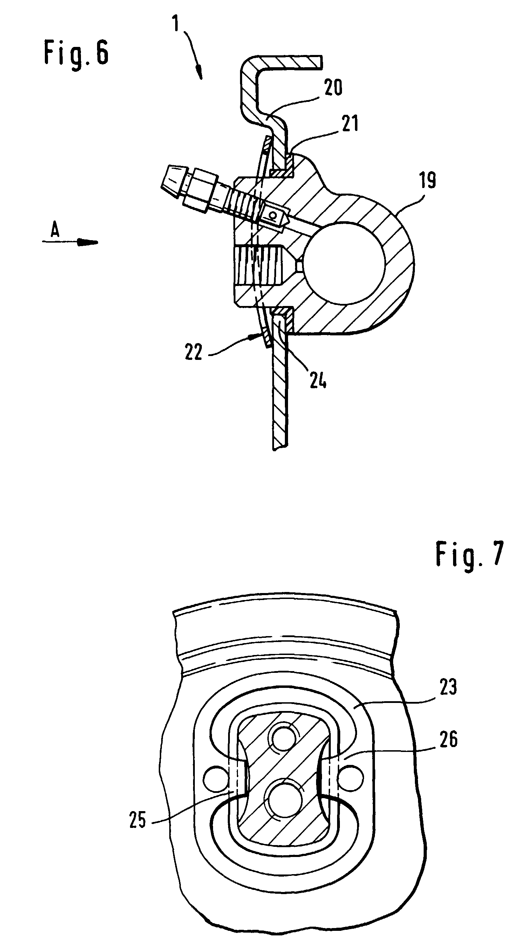

Die Fig. 6 und 7 zeigen ein weiteres Ausführungsbeispiel, wobei gleiche Bauteile die gleichen Bezugsziffern wie in Fig. 5 aufweisen. Das Bauteil 19 nach Art eines Bremszylinders ist bei diesem Ausführungsbeispiel mit Hilfe eines ringförmigen Federelementes 22 an dem Halteelement 20 angeordnet und kann relativ zu dem Halteelement 20 Schwingungen ausführen. Das Federelement 22 weist die Form eines Ringes 23 auf, der an einem Montageflansch 24 für den Bremszylinder anliegt und diesen ferner hintergreift. Das Federelement 22 verfügt ferner über zwei nach radial innen in eine Öffnung weisende, einander gegenüberliegende federnde Zungen 25,26, an denen der Bremszylinder befestigt ist.

## Patentansprüche

1. Vorrichtung zum Dämpfen und Tilgen von Bremsgeräuschen,insbesondere von Bremseinrichtungen, **gekennzeichnet** durch zumindest ein schwingungsdämpfendes Bauelement (2) und zumindest einem mit diesem zusammenwirkenden schwingungstilgenden Bauelement (4).

2. Vorrichtung nach Anspruch 1, **gekennzeichnet** durch mindestens ein an dem zu dämpfenden Bauteil (16 ) angeordnetes Federelement (5) und mindestens ein zwischen Federelement (5) und zu dämpfenden Bauteil (16) angeordnetes Dämpfungselement (3).

3. Vorrichtung nach einem oder mehreren der vorhergehenden Ansprüche, dadurch **gekennzeichnet**, daß das Federelement (5) und das Dämpfungselement (3) eine definierte Masse aufweisen.

4. Vorrichtung nach einem oder mehreren der vorhergehenden Ansprüche, dadurch **gekennzeichnet**, daß das Federelement (5) eine Blattfeder ist.

5. Vorrichtung nach einem oder mehreren der vorhergehenden Ansprüche, dadurch **gekennzeichnet**, daß das Dämpfungselement (3) an mindestens einem Schenkelende (7) des Federelementes (5) vorgesehen ist und das zu dämpfende Bauteil (16) beaufschlagt.

6. Vorrichtung nach einem oder mehreren der vorhergehenden Ansprüche, dadurch **gekennzeichnet**, daß die Form des Federelementes (5) an das zu dämpfende Bauteil (16) angepaßt ist.

7. Vorrichtung nach einem oder mehreren der vorhergehenden Ansprüche, dadurch **gekennzeichnet**, daß das Federelement (5) ein Blattfederpaket ist.

8. Vorrichtung nach einem oder mehreren der vorhergehenden Ansprüche, dadurch **gekennzeichnet**, daß das Federelement (5) aus mehreren Lagen (11,12,13,14) gleicher oder unterschiedlicher Dicke (d) besteht.

9. Vorrichtung nach einem oder mehreren der vorhergehenden Ansprüche, dadurch **gekennzeichnet**, daß die Vorrichtung an einem Bremsträger oder Bremsgehäuse angeordnet ist und einen Arm (18) beaufschlagt.

10. Vorrichtung nach Anspruch 1, dadurch **gekennzeichnet**, daß ein funktionsnotwendiges Bauteil (19) zugleich als schwingungstilgendes Bauelement (4) an dem zu dämpfenden Haltelement (20) vorgesehen ist.

11. Vorrichtung nach Anspruch 10, dadurch **gekennzeichnet**, daß ein Bremszylinder als schwingunstilgendes Bauelement (4) vorgesehen ist, unter Federvorspannung steht und das zu dämpfende Bauteil (20) beaufschlagt.

12. Vorrichtung nach einem oder mehreren der vorhergehenden Ansprüche, dadurch **gekennzeichnet**, daß zwischen Bremszylinder und zu dämpfendem Bauteil (20) ein Dämpfungselement (21) vorgesehen ist.
